(19) Europäisches Patentamt
European Patent Office
Office européen des brevets

(11) **EP 3 305 477 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
**B25J 9/10** $^{(2006.01)}$        **B25J 9/00** $^{(2006.01)}$

(21) Anmeldenummer: **17193934.1**

(22) Anmeldetag: **29.09.2017**

(54) **VORRICHTUNG ZUM DREIDIMENSIONALEN POSITIONIEREN EINER KOPPELKOMPONENTE SOWIE AKTOR-SYSTEM**

DEVICE FOR THREE-DIMENSIONAL POSITIONING OF A COUPLING COMPONENT AND ACTUATOR SYSTEM

DISPOSITIF DE POSITIONNEMENT TRIDIMENSIONNEL D'UN COMPOSANT DE COUPLAGE AINSI QUE SYSTÈME D'ACTIONNEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2016 DE 102016219260**

(43) Veröffentlichungstag der Anmeldung:
**11.04.2018 Patentblatt 2018/15**

(73) Patentinhaber:
- **AIRBUS HELICOPTERS DEUTSCHLAND GmbH**
  **86609 Donauwörth (DE)**
- **Fraunhofer-Gesellschaft zur Förderung der angewandten Forschung e.V.**
  **80686 München (DE)**

(72) Erfinder:
- **Bormann, Erik**
  **64293 Darmstadt (DE)**
- **Lehmann, Martin**
  **64285 Darmstadt (DE)**
- **Mohr, Maximilian**
  **92318 Neumarkt (DE)**
- **Roser, Tim**
  **86609 Donauwörth (DE)**
- **Buesing, Sebastian**
  **86159 Augsburg (DE)**
- **Wolf, Christian**
  **89231 Neu-Ulm (DE)**

(74) Vertreter: **Rösler, Uwe**
  **Rösler Patentanwaltskanzlei**
  **Landsberger Strasse 480a**
  **81241 München (DE)**

(56) Entgegenhaltungen:
EP-A2- 1 145 806        CN-A- 104 802 155
DE-C1- 19 903 613

- **DAMIEN CHABLAT ET AL: "Architecture Optimization of a 3-DOF Translational Parallel Mechanism for Machining Applications, the Orthoglide", ARXIV.ORG, CORNELL UNIVERSITY LIBRARY, 201 OLIN LIBRARY CORNELL UNIVERSITY ITHACA, NY 14853, 24. August 2007 (2007-08-24), XP080299781, DOI: 10.1109/TRA.2003.810242**

**Beschreibung**

**Technisches Gebiet**

Die Erfindung bezieht sich auf eine Vorrichtung zum 3- dimensionalen Positionieren einer Koppelkomponente, die Teil einer aktorisch angetriebenen Koppelstruktur ist.

**Stand der Technik**

Klassische Positioniersysteme der vorstehend genannten Gattung betreffen mehrachsig, motorisch angetriebene Stellsysteme, die zumeist eine positionsaufgelöste Linearauslenkung längs dreier orthogonal zueinander orientierter Raumachsen erlauben. Je nach Einsatz- und Verwendungszweck des betreffenden Positioniersystems ist der zu positionierende Endeffektor unterschiedlich ausgebildet, bspw. in Form eines Greifers, einer individuell ausgebildeten funktionellen Schnittstelle, eines Sensors oder eines Bearbeitungswerkzeuges, um nur einige Beispiele zu nennen.

Bekannte linear auslenkende Positioniersysteme stellen bspw. Kreuztische, sog. x-y-Tische, dar, die zu Zwecken einer dreidimensionalen Positionierung zusätzlich längs der orthogonal zur x-y-Ebene orientierten Raumrichtung verfahrbar gelagert sind.

Positioniersysteme mit räumlich maximalen Freiheitsgraden, die neben Linearauslenkungen auch Rotationsbewegungen ermöglichen, stellen vielachsige Industrieroboter, bspw. in Form sog. Portalroboter dar, die Positionieraufgaben in weitreichender Form zu übernehmen in der Lage sind.

Form und Ausbildung von aktorisch unterstützten Positioniersystemen sind in an sich bekannter Weise den individuellen Bedürfnissen der jeweils zu bewältigenden Positionieraufgaben angepasst. So gilt es bspw. an mehreren räumlich dicht nebeneinander liegenden mechanischen Anschluss- bzw. Koppelstellen eines Strukturbauteils jeweils einen Endeffektor eines Positioniersystems zu positionieren, um bspw. an jeder Anschluss- bzw. Koppelstelle strukturbauteilseitige Verformungen in Form von Wegänderungen hochgenau zu erfassen. Zudem soll es alternativ oder in Kombination möglich sein, am Ort der jeweiligen Anschluss- bzw. Koppelstellen vermittels des dreidimensionalen Positioniersystems dynamische oder statische Kräfte auf das Strukturbauteil lokal zu applizieren oder entsprechend aufzunehmen und sensorisch zur erfassen.

Grundsätzlich stehen hierfür an sich bekannte Industrierobotersysteme zur Verfügung, deren Endeffektor jeweils kraft- sowie auch weggeregelt positioniert und somit ausgelenkt werden kann. Gilt es jedoch an einer Vielzahl von räumlich dicht nebeneinander liegenden Anschlussstellen eines Strukturbauteils hochgenaue Positionierungen jeweils mit einem separaten Industrieroboter vorzunehmen, so sind Grenzen zum einen im Hinblick auf den hierfür erforderlichen Stellraum für die Unterbringung der Industrieroboter neben dem Strukturbauteil gesetzt, zum anderen werden auch wirtschaftliche Grenzen aufgrund der erforderlichen Vielzahl an derartig kostenrelevanten Industrierobotern überschritten.

Die Druckschrift US 2008/0202274 A1 beschreibt ein in der Medizin einsetzbares Manipulatorsystem, bestehend aus wenigstens drei mit einem Körper verbundenen Aktoren, die den Körper unabhängig voneinander um wenigstens einen räumlichen Freiheitsgrad zu bewegen bzw. zu positionieren vermögen.

Die Druckschrift WO 2009/049654 A1 offenbart ein Bewegungssystem zur Ausführung von Relativbewegungen zwischen einem kinematischen Eingangsglied und einem Ausgangsglied, zwischen denen eine Vielzahl an Kupplungsglieder angeordnet ist.

Die Druckschrift US 6,425,303 B1 beschreibt eine vergleichbare Kinematik zwischen einer Basis- und einer dazu positionierbar gelagerten Endkomponente.

Der Artikel "Architecture Optimization of a 3-DOF Translational Parallel Mechanism for Maching Applications, the Orthoglide" der Fachzeitschrift IEEE Transactions on Robotics and Automation von D. Chablat und P. Wenger offenbart eine Vorrichtung zum 3-dimensionalen Positionieren einer Plattform, die alle Merkmale des Oberbegriffs des Anspruchs 1 aufweist. Die Struktur der Vorrichtung erstreckt sich gleichmäßig entlang der drei senkrechten Kanten eines Würfels und ist daher sperrig.

**Darstellung der Erfindung**

Der Erfindung liegt die Aufgabe zugrunde eine Vorrichtung zum dreidimensionalen Positionieren einer als Endeffektor ausgebildeten Koppelkomponente, die Teil einer aktorisch angetriebenen Koppelstruktur ist, derart auszubilden, so dass die Koppelkomponente räumlich präzise positionierbar ist, d. h. mit wenigstens einer Genauigkeit von ± 0,1 mm, vorzugsweise ± 0,01 mm, längs jeweils aller drei orthogonal zueinander orientierten Raumachsen. Ferner soll die Vorrichtung robust und stabil ausgebildet sein, so dass sie in der Lage ist am Ort der Koppelkomponente Stellkräfte mit bis zu 50 kN zu erzeugen bzw. abzufangen. Die Vorrichtung soll baulich möglichst kompakt ausgebildet sein, um so eine Kombinierbarkeit mit einer Vielzahl baugleich ausgebildeter Vorrichtungen zur Errichtung eines Stapelverbundes zu ermöglichen, mit dem eine Vielzahl räumlich dicht nebeneinander liegende, jeweils aktorisch angetriebene und positionierbare Koppelkomponenten realisiert werden kann. Der räumliche Abstand jeweils zweier benachbarter Koppelkomponenten sollte bis hinab zu ca. 200 mm betragen.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung unter Bezugnahme auf die Ausführungsbeispiele zu entnehmen.

Lösungsgemäß zeichnet sich die Vorrichtung zum dreidimensionalen Positionieren einer Koppelkomponente, die Teil einer aktorisch angetriebenen Koppelstruktur ist, durch folgende Komponenten aus: Wenigstens ein erstes Koppelelement, das über eine erste Längserstreckung verfügt, ist vermittels eines ersten Aktors bidirektional längs dessen ersten Längserstreckung auslenkbar gelagert. Ferner ist wenigstens ein zweites Koppelelement vorgesehen, das über eine zweite Längserstreckung verfügt, das vermittels eines zweiten Aktors bidirektional längs dessen zweiten Längserstreckung auslenkbar gelagert ist, wobei die zweite Längserstreckung orthogonal zur ersten Längserstreckung orientiert ist. Ferner ist ein Hebel vorgesehen, der eine Hebellängserstreckung besitzt und drehbar um eine Drehachse gelagert ist, die den Hebel in einen Last- und in einen Kraftarm unterteilt.

In einer ersten lösungsgemäßen Ausführungsvariante ist die Hebellängserstreckung des Hebels längs der ersten Längserstreckung des ersten Koppelelementes orientiert, wobei der Lastarm des Hebels endseitig drehbar um die zweite Längserstreckung am zweiten Koppelelement befestigt ist.

In einer zweiten lösungsgemäßen Ausbildungsvariante ist die Hebellängserstreckung des Hebels längs der zweiten Längserstreckung des zweiten Koppelementes orientiert, wobei der Lastarm des Hebels endseitig drehbar um die erste Längserstreckung am ersten Koppelelement befestigt ist.

In beiden alternativen lösungsgemäßen Ausbildungsformen steht der Kraftarm des Hebels mit einem dritten Aktor derart in Wirkverbindung, so dass ein um die Drehachse orientiertes auf den Hebel einwirkendes Drehmoment erzeugbar ist.

Der vorteilhafte Charme der Vorrichtung zum dreidimensionalen Positionieren einer aktorisch angetriebenen Koppelstruktur ist darin zu sehen, dass das erste und zweite Koppelelement sowie der Hebel in einer Ausgangsstellung vorzugsweise in einer gemeinsamen Ebene angeordnet sind und orthogonal zur Ebene über nur eine geringe Bauhöhe verfügen.

In einer bevorzugten Ausführungsvariante sind zudem der wenigstens erste und zweite Aktor in der gemeinsamen Ebene angeordnet, sodass sämtliche Komponenten zur bidirektionalen Auslenkung der Koppelkomponente längs der ersten und zweiten Längserstreckung in der von dem ersten und zweiten Koppelelement aufgespannten Ebene liegen. Lediglich der dritte Aktor, der zur Erzeugung des auf den Kraftarm des Hebels einwirkenden Drehmomentes dient, ist außerhalb dieser Ebene angeordnet und besitzt eine auf den Kraftarm gerichtete Aktorwirkrichtung, die mit der vorstehend bezeichneten gemeinsamen Ebene einen Winkel $\alpha$ einschließt, für den gilt $0° < \alpha < 90°$, vorzugsweise $20° \leq \alpha \leq 65°$, besonders vorzugsweise $35° \leq \alpha \leq 55°$ liegt. Durch die schräge Ausrichtung des dritten Aktors bzw. der Aktorwirkrichtung des dritten Aktors relativ zur gemeinsamen Ebene ist, wie die weiteren Ausführungen noch zeigen werden, eine orthogonal zur gemeinsamen Ebene orientierte Stapelbarkeit jeweils identisch ausgebildeter lösungsgemäßer Vorrichtungen zum dreidimensionalen Positionieren einer Vielzahl separater Koppelkomponenten möglich.

Nicht notwendigerweise Weise jedoch in vorteilhafter Form ist die zu positionierende Koppelkomponente der Koppelstruktur längs der ersten und/oder zweiten Längserstreckung angeordnet. Auf diese Weise können die axial längs der ersten und/oder zweiten Koppelkomponente wirkenden Zug- und/oder Druckkräfte verlustfrei übertragen werden.

Sämtliche Aktoren sind jeweils als Linearaktoren ausgebildet und je nach Einsatzzweck der Vorrichtung in Form eines Servomotors, Schrittmotors, in Form einer Hydraulikzylindereinheit oder Pneumatikzylindereinheit ausgebildet. Nicht notwendigerweise müssen die drei Aktoren identisch ausgebildet sein, so sind durchaus Anwendungen denkbar, bei denen die vorstehenden Linearaktoren in beliebiger Kombination miteinander zum Einsatz kommen können.

In einer bevorzugten Ausführungsform ist der erste Aktor relativ zum ersten Koppelelement derart angeordnet, so dass dessen Aktorwirkrichtung parallel zur Längserstreckung des ersten Koppelelementes orientiert ist. In gleicher Weise ist der zweite Aktor relativ zum zweiten Koppelelement derart angeordnet, so dass dessen Aktorwirkrichtung parallel zur zweiten Längserstreckung orientiert ist. In Abhängigkeit des verfügbaren Bauraumes und der jeweils zu Verfügung stehenden Aktoren bietet es sich an, den ersten Aktor in Längserstreckung unmittelbar mit dem ersten Koppelelement zu verbinden und in gleicher Weise den zweiten Aktor längs der zweiten Längserstreckung unmittelbar mit dem zweiten Koppelelement zu verbinden.

Vorzugsweise sind beide Koppelelemente als starre Längskörper, bspw. in Form einer Stange, eines Rohres oder eines Längsprofiles ausgebildet.

Die vorstehend skizzierte serielle Anordnung des ersten und zweiten Aktors längs des ersten bzw. zweiten Koppelelementes bietet sich an, sofern keine allzu großen Stellkräfte zu Positionierungszwecken abgerufen bzw. abgefangen werden müssen.

In einer weiteren bevorzugten Ausführungsform, die sich zum Generieren bzw. Abfangen großer Stellkräfte am Ort der zu positionierenden Koppelkomponente eignet, ist der erste Aktor über einen ersten Kraftübersetzungsme-

chanismus mit dem ersten Koppelemente verbunden. Alternativ oder in Kombination ist auch der zweite Aktor über einen zweiten Kraftübersetzungsmechanismus mit dem zweiten Koppelelement verbunden. In beiden Fällen sind die Kraftübersetzungsmechanismen vorzugsweise jeweils als mechanischer Hebel ausgebildet, der sich an einem festen mechanischen Gegenlager abstützt und die Aktorkräfte in einem durch ein entsprechend gewähltes Hebelarmverhältnis mechanisch übersetzt.

In gleicher Weise wie der erste und zweite Aktor stützt sich auch der dritte Aktor einseitig an einem Festlager ab. Im Unterschied zu den beiden anderen Aktoren ist der dritte Aktor längs dessen Aktorwirkrichtung jedoch mit dem Kraftarm eines Hebels verbunden, dessen Drehachse sich ebenso an einem Festlager abstützt.

Längs des Lastarmes des Hebels ist eine die Länge des Lastarmes variierende Linearführung angeordnet, durch deren Längenänderung sowie durch Schwenken des Lastarmes relativ zur Drehachse eine Auslenkung des Koppelelementes weitgehend orthogonal zu der durch das erste und zweite Koppelelement aufgespannten Ebene initiierbar ist.

Die Lagerung der exakt zu positionierenden Koppelkomponente, die vorzugsweise längs des ersten und/oder zweiten Koppelelementes angeordnet ist, ist rotationsstarr sowohl um die erste als auch zweite Längserstreckung. In dem nachstehenden konkreten Ausführungsbeispiel wird ersichtlich, dass die mechanische Entkopplung gegenüber Drehung am Ort der Koppelkomponente längs der ersten und zweiten Längserstreckung mittels geeignet ausgebildeter und angeordneter Kugel- und/oder Kardangelenke realisierbar ist.

Zu Zwecken einer exakten Positionsbestimmung am Ort der Koppelkomponente ist im Bereich der Koppelkomponente eine separate Vorrichtung zur Positionsbestimmung angebracht. Die Vorrichtung zur Positionsbestimmung generiert Positionssignale, die zu Zwecken der Ansteuerung der jeweils drei Aktoren einer Aktorsteuereinrichtung zugeführt werden.

Durch die kompakte Ausbildung und Anordnung sämtlicher Vorrichtungskomponenten in einer gemeinsamen Ebene, im Weiteren als Vorrichtungsebene bezeichnet, mit Ausnahme des dritten Aktors, ist die Voraussetzung für eine Stapelbarkeit beliebig vieler lösungsgemäßer Vorrichtungen übereinander geschaffen, wobei wenigstens zwei lösungsgemäß ausgebildete Vorrichtungen mit jeweils parallel zueinander ausgerichteten Vorrichtungsebenen zueinander beabstandet angeordnet sind.

Eine derartige Stapelanordnung, vorzugsweise bestehend aus einer Vielzahl übereinander angeordneter separater Vorrichtungen, die nicht notwendigerweise einen äquidistanten Abstand zwischen zwei benachbarten Vorrichtungsebenen aufweisen müssen, schafft die Möglichkeit der Anordnung einer Vielzahl von in unmittelbarer räumlicher Nähe angeordneten Koppelkomponenten, deren räumliche Positionen jeweils exakt bestimmbar sind und die in Abhängigkeit einer weg- oder kraftgeregelten aktorischen Zustellung separat voneinander mit entsprechenden Anschluss- bzw. Koppelstellen eines zu untersuchenden Strukturbauteils in Wirkverbindung treten können.

Mögliche Anwendungen des lösungsgemäß ausgebildeten Aktorsystems betreffen Prüfmaschinen für flächige Strukturbauteile, bspw. Flugzeugkomponenten, insbesondere in Form von Flugzeugzellen, an denen an einer Vielzahl von Anschlussstellen Kräfte mit bis zu 50 kN einzuleiten bzw. abzufangen sind. Die einzelnen Koppelkomponenten sind hierzu in allen drei Raumrichtungen vorzugsweise jeweils mit einem Stellweghub von $\pm$ 20 mm oder mehr auszulenken.

Die Druckschrift US 2008/0202274 A1 beschreibt ein in der Medizin einsetzbares Manipulatorsystem, bestehend aus wenigstens drei mit einem Körper verbundenen Aktoren, die den Körper unabhängig voneinander um wenigstens einen räumlichen Freiheitsgrad zu bewegen bzw. zu positionieren vermögen.

Die Druckschrift WO 2009/049654 A1 offenbart ein Bewegungssystem zur Ausführung von Relativbewegungen zwischen einem kinematischen Eingangsglied und einem Ausgangsglied, zwischen denen eine Vielzahl an Kupplungsglieder angeordnet ist.

Die Druckschrift US 6,425,303 B1 beschreibt eine vergleichbare Kinematik zwischen einer Basis- und einer dazu positionierbar gelagerten Endkomponente.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1     perspektivische Draufsicht auf eine lösungsgemäß ausgebildete Koppelstruktur,

Fig. 2     Detailansicht zur Erläuterung einer Auslenkung längs der z-Achse sowie

Fig. 3     Darstellung eines Aktorsystems umfassend eine Vielzahl vertikal übereinander angeordneter Vorrichtungen zum dreidimensionalen Positionieren einer Koppelkomponente.

**Wege zur Ausführung der Erfindung, gewerbliche Verwendbarkeit**

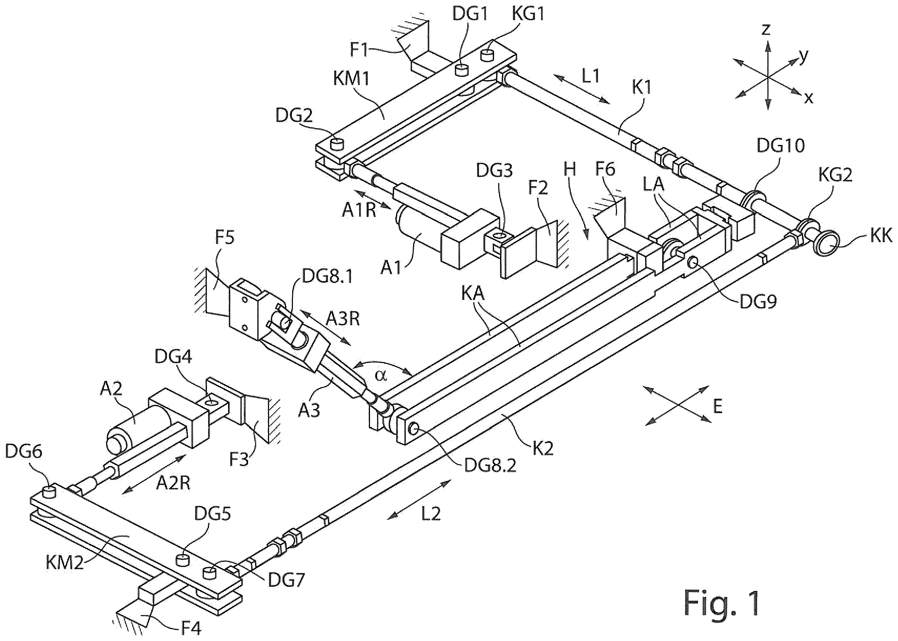

Figur 1 zeigt ein bevorzugtes Ausführungsbeispiel zur Realisierung einer Vorrichtung zum dreidimensionalen Positionieren einer Koppelkomponente KK, die Teil einer aktorisch angetriebenen Koppelstruktur KS ist. In der weiteren Beschreibung wird Bezug genommen auf das in Figur 1 entnehmbare Koordinatensystem, das durch die drei orthogonal zueinander orientierten Raumachsen, x, y, z, definiert ist. Die der Figur 1 entnehmbare Koppelstruktur KS dient zur hochgenauen räumlichen Positionierung der endseitig an der Koppelstruktur KS angebrachten Koppelkomponente KK. So vermag die Koppelstruktur KS die Koppelkomponente KK mit einer Positioniergenauigkeit von bis zu 0,01 mm mit maximalen Positionierhüben längs der drei Raumachsen x, y, z mit bis zu 30 mm auszulenken. Dabei vermag die Koppelstruktur KS Lasten bzw. Kräfte von bis zu 50 kN abzufangen bzw. zu generieren.

Zur Erläuterung der Auslenkung der Koppelkomponente KK längs der jeweiligen Raumachsen x, y, z seien die jeweils aktorisch angetriebenen Achsen der Koppelstruktur KS im Einzelnen erläutert:

1) Positionierung der Koppelkomponente KK längs der x-Achse:

Zu Zwecken einer ortsaufgelösten Positionierung der Koppelkomponente KK längs der x-Achse ist ein längliches Koppelelement K1 vorgesehen, an dem einseitig endseitig die Koppelkomponente KK angebracht ist. Das erste Koppelelement K1 ist vorzugsweise als Biegeträger ausgebildet und mit seinem dem der Koppelkomponente KK gegenüberliegenden Trägerende über ein Kardangelenk KG1 mit einem Hebelarmende eines als Hebel ausgebildeten ersten Kraftübertragungsmechanismus KM1 verbunden. Der hebelartig ausgebildete Kraftübertragungsmechansimus KM1 ist an einem Drehgelenk DG1 schwenkbar angelenkt, dessen Drehachse orthogonal zur x-y-Ebene E orientiert ist. Das Drehgelenk DG1 stützt sich an einem Festlager F1 ab.

Am gegenüberliegenden Hebelarmende des Kraftübertragungsmechanismus KM 1 ist über ein zweites Drehgelenk DG2 ein erster Aktor A1 angelenkt, dessen Aktorwirkrichtung A1R parallel zur Längserstreckung L1 des als Biegeträger ausgebildeten ersten Koppelelementes K1 orientiert ist. Der Aktor A1 ist vermittels eines weiteren Drehgelenkes DG3 an einem Festlager F2 angelenkt.

Durch die drehgelenkige Lagerung des Kraftübertragungsmechanismuses M1 sowie der kardanischen einseitigen Anbindung des als Biegeträger ausgebildeten Koppelelementes K1 wird am Ort des Kardangelenkes KG1 eine Drehung um die y- und z-Achse zugelassen, jedoch ist eine Rotation um die x-Achse gesperrt, d.h. das als Biegeträger ausgebildete Koppelelement K1 ist zusätzlich zur Linearauslenkung längs der x- Achse drehbar um die y- und z- Achse gelagert.

Durch die Wahl der Hebelarmlängen des Kraftübertragungsmechanismuses KM1 kann die längs der als Biegeträger ausgebildeten Koppelelementes K1 wirkende Aktorkraft des ersten Aktors A1 in vorgegebener Weise skaliert werden.

Zu Zwecken einer ortsaufgelösten Positionierung der Koppelkomponente KK längs der x-Achse ist vorzugsweise im Bereich der Koppelkomponente KK eine Positionsmessvorrichtung (nicht dargestellt) angebracht, deren Positionsmesssignale einer nicht dargestellten Steuereinheit zur Ansteuerung des Aktors A1 zugeleitet werden. Sowohl die Positionsmessvorrichtung als auch die Steuereinheit können in Form handelsüblicher Komponenten bezogen und angeordnet werden und bedürfen daher an dieser Stelle keiner weiteren Erläuterung.

2) Positionierung der Koppelkomponente KK längs der y-Achse:

Für die Auslenkung der Koppelkomponente KK in y-Richtung dient ein zweiter Aktor A2, dessen Aktorwirkung A2R parallel zur Längsrichtung L2 des als Zug-/Druckstab ausgebildeten, zweiten Koppelelementes K2 orientiert ist. Der zweite Aktor A2 stützt sich über ein Drehgelenk DG4 an einem dritten Festlager F3 ab. Zu Zwecken der Kraftübertragung dient ein zweiter Kraftübertragungsmechanismus KM2, der in Form eines Hebels ausgebildet ist, der drehbar an einem Drehgelenk DG5 angelenkt ist, das sich seinerseits am vierten Festlager F4 abstützt. Jeweils über Drehgelenke DG6 und DG7 sind der zweite Aktor A2 sowie das als Zug-/Druckstab ausgebildete zweite Koppelelement K2 einseitig am Kraftübertragungsmechanismus 2 drehbeweglich angelenkt. Zumindest das Drehgelenk DG7 ist als Kugelgelenk ausgebildet. Das andere Ende des als Zug-/Druckstab ausgebildeten zweiten Koppelelementes K2 ist über ein kardanisches Gelenk KG2 am als Biegeträger ausgebildeten ersten Koppelelement K1 nahe des Koppelelementes KK angebunden.

Durch die einseitig kardanische Lagerung des zweiten Koppelelementes K2 um die x-Achse am ersten Koppelelement K1 sowie dessen endseitige kugelgelenkige Lagerung zum Kraftübertragungsmechanismus KM2 über das Drehgelenk DG7 sind Rotationen des als Zug-/Druckstab ausgebildeten zweiten Koppelelementes K2 sowohl um die x- als auch z-Achse möglich. Hingegen sind Rotationen um die y-Achse gesperrt.

Gleichfalls zu Zwecken einer hochgenauen Positionierung der Koppelkomponente KK in y-Richtung ist eine entsprechende Positionsmessvorrichtung im Bereich der Koppelkomponente KK vorgesehen, deren Positionsmesssignale einer nicht weiter dargestellten Ansteuereinheit zugeleitet werden, über die der zweite Aktor A2 angesteuert wird.

3) Positionierung der Koppelkomponente KK längs der z-Achse:

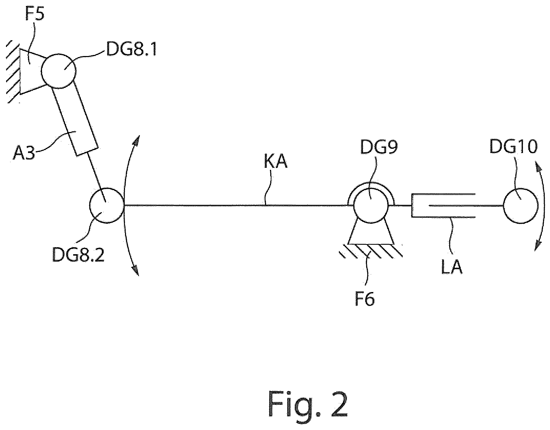

Zu Zwecken einer ortsaufgelösten Auslenkung der Koppelkomponente KK in z-Richtung ist ein dritter Aktor A3 vorgesehen, der im Unterschied zu allen bisher beschriebenen Komponenten der Koppelstruktur KS außerhalb der Ebene E angeordnet ist. Die den dritten Aktor A3 zugeordnete Aktorwirkrichtung A3R schließt mit der Ebene E einen Winkel $\alpha$ ein, der vorzugsweise zwischen 20° und 65°, besonders vorzugsweise 45° $\pm$ 10° beträgt. In diesem Zusammenhang wird ergänzend zu Figur 1 auf Figur 2 verwiesen.

Der dritte Aktor A3 ist über ein als Kardangelenk ausgebildetes Drehgelenk DG8.1 mit einem Festlager F5 einseitig verbunden. Das wirksame Aktorende des dritten Aktors A3 ist über ein als Kugelgelenk ausgebildetes Drehgelenk DG8.2 einseitig mit dem Kraftarm KA des Hebels H verbunden. Der Hebel H ist vorzugsweise über ein als Kugelgelenkkopf ausgebildetes Drehgelenk DG9 mit dem Festlager F6 verbunden. Dies geht auch aus der Detaildarstellung gemäß Figur 2 hervor. Der Lastarm LA des Hebels H ist als Linearlager ausgebildet und stirnseitig mit dem als Biegeträger ausgebildeten ersten Koppelelement K1 über ein weiteres als Kugelgelenk ausgebildetes Drehlager DG10 verbunden.

Die vollständig kugelgelenkige Lagerung des Hebels H, siehe DG8.1, DG8.2, DG9, DG10 ermöglicht eine Drehung des Hebels um die z-Achse. Das Linearlager längs des Lastarmes LA ermöglicht es dem Hebel H den Bewegungen des als Biegeträger ausgebildeten ersten Koppelelementes K1 sowohl in x- als auch in y-Richtung zu folgen.

Auch in diesem Fall ist zum Zwecke der Positionserfassung der Koppelkomponente KK bei Bewegungen längs zur z-Achse im Bereich der Koppelkomponente KK eine entsprechende Positionsmessvorrichtung angebracht, durch deren Positionssignale eine kontrollierte Ansteuerung des dritten Aktors A3 sowohl zu Zwecken einer ortsaufgelösten Positionierung der Koppelkomponente KK als auch zur gezielten Krafteinleitung vorgenommen werden kann.

Ferner sehen die drei Aktoren A1, A2, A3 zur Kraftmessung längs der drei Raumachsen jeweils längs ihrer Aktorwirkrichtungen A1R, A2R, A3R entsprechende Kraftsensoren vor.

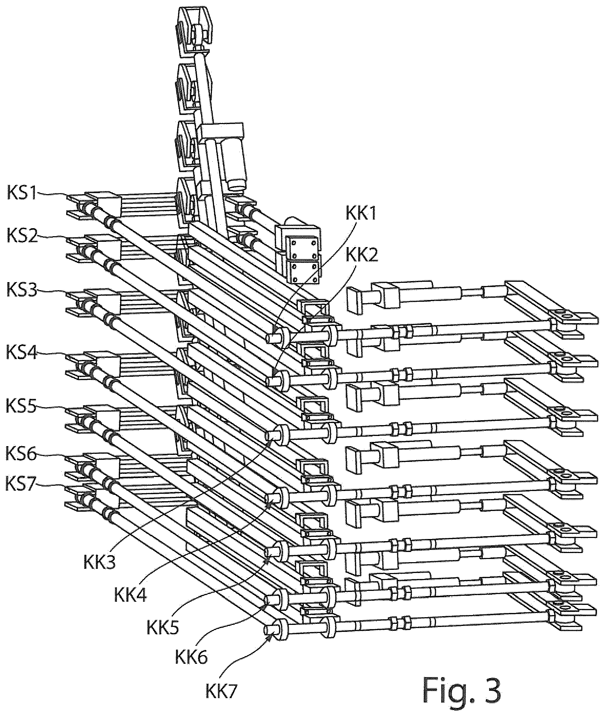

Figur 3 zeigt eine perspektivische Darstellung eines Aktor-Systems AS, das sich aus einer stapelförmigen Anordnung einer Vielzahl der vorstehend erläuterten Vorrichtung zum dreidimensionalen Positionieren zusammensetzt. Die einzelnen Koppelstrukturen KS1, KS2, .....KS7 sind mit jeweils parallel zueinander angeordneten Ebenen stapelförmig übereinander angeordnet. Sämtliche in Figur 3 dargestellten Koppelstrukturen KS1, KS2, .....KS7 weisen jeweils endseitig eine Koppelkomponente KK1, KK2, KK3, KK4, KK5, KK6 und KK7 auf. Die Abstände der einzelnen Koppelkomponenten in vertikaler Stapelrichtung sind nicht notwendigerweise konstant, sondern sind an die örtlichen Gegebenheiten einer nicht weiter dargestellten Strukturbaueinheit angepasst.

Alle bau- und funktionsgleichen Komponenten der Koppelstrukturen sind übereinander oder leicht versetzt übereinander angeordnet. Anhand des in Figur 3 dargestellten Aktor-Systems kann der hohe Grad an Integrationsfähigkeit gesehen werden, mit der es möglich ist eine große Vielzahl separate räumlich verteilt angeordnete sowie auch aktorisch ansteuerbare und positionierbare Koppelkomponenten in einem kleinen Volumenbereich zu realisieren.

**Bezugzeichenliste**

| | |
|---|---|
| A1, A2, A3 | Aktor |
| A1R, A2R, A3R | Aktorwirkrichtung |
| D | Drehachse |
| DG1, DG2, ... DG10 | Drehgelenk |
| F1, F2, ... F6 | Mechanische Festlager |
| H | Hebel |
| K1 | Erstes Koppelelement |
| K2 | Zweites Koppelelement |
| KA | Kraftarm |
| KG1, KG2 | Kardangelenk |
| KK, KK1...KK7 | Koppelkomponente |
| KM1, KM2 | Kraftübersetzungsmechanismus |
| KS, KS1...KS7 | Koppelstruktur |
| L1, L2 | Längsrichtung |
| LA | Lastarm |

**Patentansprüche**

1. Vorrichtung zum 3- dimensionalen Positionieren einer Koppelkomponente (KK), die Teil einer aktorisch angetriebenen Koppelstruktur (KS) ist, mit wenigstens

   . einem über eine erste Längserstreckung (L1) verfügenden ersten Koppelelement (K1), das vermittels eines ersten Aktors (A1) bidirektional längs dessen ersten Längserstreckung (L1) auslenkbar gelagert ist,
   - einem über eine zweite Längserstreckung (L2) verfügenden zweiten Koppelelement (K2), das vermittels eines zweiten Aktors (A2) bidirektional längs dessen zweiten Längserstreckung (L2) auslenkbar gelagert ist, die orthogonal zur ersten Längserstreckung (L1) orientiert ist, und
   - einem dritten Aktor (A3),

   **gekennzeichnet durch**

   - einen Hebel (H) mit einer Hebellängserstreckung (HL), der drehbar um eine Drehachse (D) gelagert ist, die den Hebel (H) in einen Last- (LA) und Kraftarm (KA) aufteilt,

   a) dessen Hebellängserstreckung (HL) längs der ersten Längserstreckung (L1) orientiert ist und dessen Lastarm (LA) endseitig drehbar um die zweite Längserstreckung (L2) am zweiten Koppelelement (K2) befestigt ist oder
   b) dessen Hebellängserstreckung (HL) längs der zweiten Längserstreckung (L2) orientiert ist und dessen Lastarm (LA) endseitig drehbar um die erste Längserstreckung (L1) am ersten Koppelelement (K1) befestigt ist,
   und dessen Kraftarm (KA) mit dem dritten Aktor (A3) derart in Wirkverbindung steht, so dass ein um die Drehachse (D) orientiertes auf den Hebel (H) einwirkendes Drehmoment erzeugbar ist.

2. Vorrichtung nach Anspruch 1,
   **dadurch gekennzeichnet, dass** die Koppelkomponente (KK) axial längs der ersten und/oder zweiten Längserstreckung (L1, L2) angeordnet ist.

3. Vorrichtung nach Anspruch 1 oder 2,
   **dadurch gekennzeichnet, dass** wenigstens der erste Aktor (A1), das erste Koppelelement (K1), der zweite Aktor (A2) und das zweite Koppelelement (K2) in einer gemeinsamen Ebene (E) anordenbar sind, und dass der dritte Aktor (A3) außerhalb der Ebene (E) angeordnet ist und eine auf den Kraftarm (KA) gerichtete Aktorwirkrichtung (A3R) besitzt, die mit der Ebene (E) einen Winkel $\alpha$ einschließt, für den gilt:

$$0° < \alpha < 90°.$$

4. Vorrichtung nach Anspruch 3,
   **dadurch gekennzeichnet, dass** für den Winkel $\alpha$ gilt: $20° \leq \alpha \leq 65°$.

5. Vorrichtung nach einem der Ansprüche 1 bis 4,
   **dadurch gekennzeichnet, dass** der erste, zweite und dritte Aktor (A1, A2, A3) jeweils als Linearaktor in Art eines Antriebes aus der nachfolgenden Gruppe ausgebildet ist: Servomotor, Schrittmotor, Hydraulikzylindereinheit, Pneumatikzylindereinheit.

6. Vorrichtung nach Anspruch einem der Ansprüche 1 bis 5,
   **dadurch gekennzeichnet, dass** der erste Aktor (A1) über einen ersten Kraftübersetzungsmechanismus (KM1) mit dem ersten Koppelelement (K1) verbunden ist, und/oder
   dass der zweite Aktor (A2) über einen zweiten Kraftübersetzungsmechanismus (KM2) mit dem zweiten Koppelelement (K2) verbunden ist.

7. Vorrichtung nach Anspruch 6,
   **dadurch gekennzeichnet, dass** der erste und zweite Kraftübertragungsmechanismus (KM1, KM2) jeweils als mechanischer Hebel ausgebildet ist.

8. Vorrichtung nach einem der Ansprüche 1 bis 7,
**dadurch gekennzeichnet, dass** längs des Lastarmes (LA) eine die Länge des Lastarmes variierende Linearführung enthalten ist.

9. Vorrichtung nach einem der Ansprüche 1 bis 8,
**dadurch gekennzeichnet, dass** das erste und zweite Koppelelement (K1, K2) als starre Längskörper in Form einer Stange, eines Rohrs oder Längsprofilelementes ausgebildet sind.

10. Vorrichtung nach einem der Ansprüche 1 bis 9,
**dadurch gekennzeichnet, dass** die Koppelkomponente (KK) endseitig am ersten und/oder zweiten Koppelelement (K1, K2) angeordnet ist.

11. Vorrichtung nach einem der Ansprüche 1 bis 10,
**dadurch gekennzeichnet, dass** der erste, zweite und dritte Aktor (A1, A2, A3) sowie die Drehachse (D) raumfest gelagert sind.

12. Vorrichtung nach einem der Ansprüche 1 bis 11,
**dadurch gekennzeichnet, dass** an der Koppelkomponente (KK) eine Vorrichtung zur Positionsbestimmung angebracht ist.

13. Vorrichtung nach einem der Ansprüche 1 bis 12,
**dadurch gekennzeichnet, dass** längs der Aktorwirkrichtungen (A1R, A2R, A3R) und/oder an der Koppelkomponente (KK) ein Kraftmesssensor angebracht ist.

14. Vorrichtung nach einem der Ansprüche 1 bis 13,
**dadurch gekennzeichnet, dass** eines der beiden Koppelelemente (K1, K2) als Biegeträger und das andere als Zug-/Druckstab ausgebildet ist.

15. Vorrichtung nach einem der Ansprüche 1 bis 14,
**dadurch gekennzeichnet, dass** beide Koppelelemente (K1, K2) derart gelagert sind, dass eine Rotationsbewegung jeweils um deren Längserstreckung gesperrt ist.

16. Aktor- System umfassend eine Vielzahl der Vorrichtung nach einem der Ansprüche 3 bis 15, bei dem wenigstens zwei Koppelstrukturen (KS1, KS2) orthogonal zu den diesen jeweils zugeordneten gemeinsamen Ebenen derart beabstandet angeordnet sind, so dass die Ebenen (E) beider Koppelstrukturen (KS1, KS2) parallel zueinander angeordnet sind.

**Claims**

1. A device for 3-dimensionally positioning a coupling component (KK), which forms part of an actuator-driven coupling structure (KS), comprising at least

    - a first coupling element (K1) that extends in a first longitudinal direction (L1) and can be bidirectionally displaced along its first longitudinal direction (L1) by means of a first actuator (A1),
    - a second coupling element (K2) that extends in a second longitudinal direction (L2) and can be bidirectionally displaced along its second longitudinal direction (L2), which extends orthogonal to the first longitudinal direction (L1), by means of a second actuator (A2), and
    - a third actuator (A3),

    **characterized by**

    - a lever (H) with a longitudinal lever direction (HL) that is mounted pivotably about a pivoting axis (D), which divides the lever (H) into a work arm (LA) and a power arm (KA), wherein

        a) the longitudinal lever direction (HL) of the lever extends along the first longitudinal direction (L1) and its work arm (LA) is on its end fixed on the second coupling element (K2) such that it can be pivoted about the second longitudinal direction (L2) or

b) the longitudinal lever direction (HL) of the lever extends along the second longitudinal direction (L2) and its work arm (LA) is on its end fixed on the first coupling element (K1) such that it can be pivoted about the first longitudinal direction (L1)
and
the power arm (KA) of the lever is functionally connected to the third actuator (A3) in such a way that a torque, which acts upon the lever (H) about the pivoting axis (D), can be generated.

2.   The device according to claim 1,
**characterized in that** the coupling component (KK) is arranged axially along the first and/or the second longitudinal direction (L1, L2).

3.   The device according to claim 1 or 2,
**characterized in that** at least the first actuator (A1), the first coupling element (K1), the second actuator (A2) and the second coupling element (K2) can be arranged in a common plane (E), and **in that** the third actuator (A3) is arranged outside this plane (E) and has an effective actuator direction (A3R), which is directed at the power arm (KA) and includes an angle $\alpha$ with the plane (E), wherein

$$0°<\alpha<90°$$

applies to said angle.

4.   The device according to claim 3,
**characterized in that** $20°\leq\alpha\leq 65°$ applies to the angle $\alpha$.

5.   The device according to one of claims 1-4,
**characterized in that** the first, the second and the third actuator (A1, A2, A3) are respectively realized in the form of a linear actuator, namely in the form of a drive from the following group: servo motor, stepping motor, hydraulic cylinder unit, pneumatic cylinder unit.

6.   The device according to one of claims 1-5,
**characterized in that** the first actuator (A1) is connected to the first coupling element (K1) by means of a first power transmission mechanism (KM1) and/or
that the second actuator (A2) is connected to the second coupling element (K2) by means of a second power transmission mechanism (KM2).

7.   The device according to claim 6,
**characterized in that** the first and the second power transmission mechanisms (KM1, KM2) are respectively realized in the form of a mechanical lever.

8.   The device according to one of claims 1-7,
**characterized in that** a linear guide is arranged along the load arm (LA) and varies the length of the load arm.

9.   The device according to one of claims 1-8,
**characterized in that** the first and the second coupling element (K1, K2) are realized in the form of rigid longitudinal bodies, namely in the form of a rod, a tube or a longitudinal profile element.

10.  The device according to one of claims 1-9,
**characterized in that** the coupling component (KK) is arranged on the end of the first and/or the second coupling element (K1, K2).

11.  The device according to one of claims 1-10,
**characterized in that** the first, the second and the third actuator (A1, A2, A3), as well as the pivoting axis (D), are arranged in a spatially fixed fashion.

12.  The device according to one of claims 1-11,
**characterized in that** a position determination device is arranged on the coupling component (KK).

**13.** The device according to one of claims 1-12,
**characterized in that** a force measuring sensor is arranged along the effective actuator directions (A1R, A2R, A3R) and/or on the coupling component (KK).

**14.** The device according to one of claims 1-13,
**characterized in that** one of the two coupling elements (K1, K2) is realized in the form of a flexural member and the other coupling element is realized in the form of a tension/compression member.

**15.** The device according to one of claims 1-14,
**characterized in that** both coupling elements (K1, K2) are mounted in such a way that a rotational motion about their longitudinal direction is respectively blocked.

**16.** An actuator system comprising a plurality of devices according to one of claims 3-15, wherein at least two coupling structures (KS1, KS2) are arranged orthogonal to the common planes, which are respectively assigned to these coupling structures, and spaced apart from one another in such a way that the planes (E) of both coupling structures (KS1, KS2) extend parallel to one another.

**Revendications**

**1.** Dispositif, destiné au positionnement en 3D d'un composant de couplage (KK), qui est un élément d'une structure de couplage (KS) entraînée par actionneur, pourvu d'au moins

- un premier élément de couplage (K1), disposant d'une première extension longitudinale (L1), qui au moyen d'un premier actionneur (A1) est logé en étant susceptible de dévier de manière bidirectionnelle le long de sa première extension longitudinale (L1),
- un deuxième élément de couplage (K2), disposant d'une deuxième extension longitudinale (L2), qui au moyen d'un deuxième actionneur (A2) est logé en étant susceptible de dévier de manière bidirectionnelle le long de sa deuxième extension longitudinale (L2), qui est orientée de manière orthogonale par rapport à la première extension longitudinale (L1), et
- un troisième actionneur (A3),

**caractérisé par**

- un levier (H) pourvu d'une extension longitudinale de levier (HL), qui est logé de manière rotative autour d'un axe de rotation (D) qui divise le levier (H) en un bras de charge (LA) et un bras de force (KA),

a) dont l'extension longitudinale de levier (HL) est orientée le long de la première extension longitudinale (L1) et dont le bras de charge (LA) est fixé en étant rotatif du côté extrême autour de la deuxième extension longitudinale (L2) sur le deuxième élément de couplage (K2) ou
b) dont l'extension longitudinale de levier (HL) est orientée le long de la deuxième extension longitudinale (L2) et dont le bras de charge (LA) est fixé en étant rotatif du côté extrême autour de la première extension longitudinale (L1) sur le premier élément de couplage (K1),

et dont le bras de force (KA) est en interaction avec le troisième actionneur (A3), de sorte à pouvoir générer un couple de rotation orienté autour de l'axe de rotation (D), agissant sur le levier (H).

**2.** Dispositif selon la revendication 1, **caractérisé en ce que** le composant de couplage (KK) est placé en direction axiale le long de la première et/ou de la deuxième extension longitudinale (L1, L2).

**3.** Dispositif selon la revendication 1 ou 2, **caractérisé en ce qu'**au moins le premier actionneur (A1), le premier élément de couplage (K1), le deuxième actionneur (A2) et le deuxième élément de couplage (K2) sont susceptibles d'être placés dans un plan (E) commun et **en ce que** le troisième actionneur (A3) est placé à l'extérieur du plan (E) et dispose d'un effet d'actionneur (A3R) dirigé sur le bras de force (KA), qui avec le plan (E) inclut un angle $\alpha$ pour lequel on applique :

$$0° < \alpha < 90°.$$

4. Dispositif selon la revendication 3, **caractérisé en ce que** pour l'angle a, on applique : 20° ≤ α ≤ 65°.

5. Dispositif selon l'une quelconque des revendications 1 à 4, **caractérisé en ce que** le premier, le deuxième et le troisième actionneurs (A1, A2, A3) sont conçus chacun sous la forme d'un actionneur linéaire, à la manière d'un entraînement du groupe suivant : servomoteur, moteur pas à pas, module de vérin hydraulique, module de vérin pneumatique.

6. Dispositif selon l'une quelconque des revendications 1 à 5, **caractérisé en ce que** le premier actionneur (A1) est relié par l'intermédiaire d'un premier mécanisme de transmission de puissance (KM1) avec le premier élément de couplage (K1) et/ou **en ce que** le deuxième actionneur (A2) est relié par l'intermédiaire d'un deuxième mécanisme de transmission de puissance (KM2) avec le deuxième élément de couplage (K2).

7. Dispositif selon la revendication 6, **caractérisé en ce que** le premier et le deuxième mécanisme de transmission de puissance (KM1, KM2) est conçu respectivement comme un levier mécanique.

8. Dispositif selon l'une quelconque des revendications 1 à 7, **caractérisé en ce que** le long du bras de charge (LA) est contenu un guidage linéaire faisant varier la longueur du bras de charge.

9. Dispositif selon l'une quelconque des revendications 1 à 8, **caractérisé en ce que** le premier et le deuxième éléments de couplage (K1, K2) sont conçus en tant que corps longitudinaux rigides sous la forme d'une barre, d'un tube ou d'un élément de profilé longitudinal.

10. Dispositif selon l'une quelconque des revendications 1 à 9, **caractérisé en ce que** le composant de couplage (KK) est placé de manière unilatérale sur le premier et/ou le deuxième élément de couplage (K1, K2).

11. Dispositif selon l'une quelconque des revendications 1 à 10, **caractérisé en ce que** le premier, le deuxième et le troisième actionneurs (A1, A2, A3) ainsi que l'axe de rotation (D) sont logés de manière stationnaire.

12. Dispositif selon l'une quelconque des revendications 1 à 11, **caractérisé en ce que** sur le composant de couplage (KK) est monté un dispositif destiné à déterminer la position.

13. Dispositif selon l'une quelconque des revendications 1 à 12, **caractérisé en ce que** le long des directions d'action des actionneurs (A1R, A2R, A3R) et/ou sur le composant de couplage (KK) est monté un capteur dynamométrique.

14. Dispositif selon l'une quelconque des revendications 1 à 13, **caractérisé en ce que** l'un des deux éléments de couplage (K1, K2) est conçu sous la forme d'un support de flexion et que l'autre est conçu sous la forme d'une tige de traction/tige de pression.

15. Dispositif selon l'une quelconque des revendications 1 à 14, **caractérisé en ce que** les deux éléments de couplage (K1, K2) sont logés de sorte qu'un déplacement en rotation chaque fois autour de leur extension longitudinale soit bloqué.

16. Système d'actionneurs comprenant une pluralité des dispositifs selon l'une quelconque des revendications 3 à 15, sur lequel au moins deux structures de couplage (KS1, KS2) sont placées respectivement de manière orthogonale, en étant écartés par rapport aux plans communs qui leur sont respectivement associés de telle sorte que les plans (E) des deux structures de couplage (KS1, KS2) soient placés à la parallèle l'un de l'autre.

EP 3 305 477 B1

Fig. 1

Fig. 2

KS1
KS2
KS3
KS4
KS5
KS6
KS7

KK1
KK2

KK3
KK4
KK5
KK6
KK7

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080202274 A1
- WO 2009049654 A1

- US 6425303 B1

**In der Beschreibung aufgeführte Nicht-Patentliteratur**

- **D. CHABLAT ; P. WENGER.** Architecture Optimization of a 3-DOF Translational Parallel Mechanism for Maching Applications, the Orthoglide. *Fachzeitschrift IEEE Transactions on Robotics and Automation*